# EUROPÄISCHE PATENTSCHRIFT

(11) **EP 0 427 810 B1**
(45) Veröffentlichungstag und Bekanntmachung des Hinweises auf die Patenterteilung: **15.09.1993**
(21) Anmeldenummer: 90904807.6
(22) Anmeldetag: 22.03.1990
(51) Int. Cl.: B23B 23/00

(54) **REITSTOCK**
TAILSTOCK
CONTRE-POUPEE

(30) Priorität: 25.03.1989 DE 3909848
(43) Veröffentlichungstag der Anmeldung: 22.05.1991
(73) Patentinhaber: Alois KUHN GmbH, D-71691 Freiberg (DE)
(72) Erfinder: KUHN, Gerhard, D-7101 Abstatt (DE)
(74) Vertreter: Katscher, Helmut, Dipl.-Ing.
(86) Internationale Anmeldenummer: EP9000473
(87) Internationale Veröffentlichungsnummer: WO9011155

(56) Entgegenhaltungen:
- FR-A- 607 977
- FR-A- 733 652
- FR-A- 2 377 853
- US-A- 2 748 829

## Beschreibung

Die Erfindung betrifft einen Reitstock zur Aufnahme von Werkstücken auf Bearbeitungsmaschinen, insbesondere Richtmaschinen, mit einer in einem Reitstockoberteil gelagerten Pinole und einem Reitstockunterteil, wobei das Reitstockoberteil gegenüber dem Reitstockunterteil nach oben vertikal frei beweglich ist.

Reitstöcke dienen zur Aufnahme von Werkstücken, insbesonder rotationssymmetrischen Werkstücken auf Bearbeitungsmaschinen. Die Werkstücke können mit einem Ende an einem Reitstock aufgenommen und am anderen Ende in anderer Weise aufgenommen, beispielsweise eingespannt sein. In vielen Fällen sind die Werkstücke zwischen zwei derartigen Reitstöcken aufgenommen, und zwar vorzugsweise zwischen Zentrierspitzen, die jeweils an den Pinolen der beiden Reitstöcke angeordnet sind und jeweils in eine Zentrierbohrung am Werkstückende ragen.

Im allgemeinen ist die Zentrierspitze des einen Reitstocks feststehend angeordnet, während die Zentrierspitze des anderen Reitstocks axial verstellbar und/oder federnd gelagert ist.

Vor allem verhältsnismäßig dünne, längliche Werkstücke, wie Wellen oder Spindeln, sind während der Bearbeitung Durchbiegungen ausgesetzt, die zu einer Änderung des axialen Abstandes der beiden Zentrierbohrungen führen. Diese axiale Abstandsänderung wird von der axial federnden Zentrierspitze ausgeglichen. Beim Bearbeitungsvorgang auftretende vertikale Verlagerungen der Werkstückenden können aber von diesen starren oder nur axial federnden Zentrierspitzen der bekannten Reitstöcke nicht aufgenommen werden, bei denen das Reitstockoberteil und das Reitstockunterteil einen gemeinsamen starren Reitstockkörper bilden.

Auf Richtmaschinen wird auf die zu richtenden, meist länglichen Werkstücke, insbesondere Wellen oder Spindeln, durch einen Richtstempel eine senkrechte Kraft ausgeübt. Das Werkstück ist dabei zwischen den Zentrierspitzen zweier Reitstöcke aufgenommen und auf zwei Widerlagern nach unten abgestützt, die sich beiderseits im Abstand zur Angriffstelle des Richtstempels befinden. Durch die beim Richtvorgang auftretende Durchbiegung des Werkstücks werden dessen Enden vertikal nach oben bewegt, wenn sich das jeweilige Widerlager nicht unmittelbar am Werkstückende befindet, was jedoch nur in Sonderfällen zutrifft.

Bei den bekannten, ein starr angeordnetes Reitstockoberteil aufweisenden Reitstöcken wird diese Verlagerung der Werkstückenden nach oben durch die Zentrierspitzen verhindert. Dies führt entweder zu einer unerwünschten zusätzlichen Verbiegung des Werkstücks oder kann bei größeren Durchbiegungen des Werkstücks zu einem Herausspringen der federnd angedrückten Zentrierspitze aus der zugeordneten Zentrierbohrung führen. Das Werkstück verliert daduch seine vorbestimmte Bearbeitungslage.

Eine vertikale Beweglichkeit eines Reitstockoberteils ist bei einem Reitstock der eingangs genannten Gattung bekannt (US-A-27 48 829). Dabei ist jedoch keine genaue Parallelführung des beweglichen Reitstockoberteils vorgesehen; insbesondere ist nicht sichergestellt, daß bei einer Durchbiegung des Werkstücks ein ständiger Kontakt zwischen der Zentrierspitze und dem Werkstück aufrechterhalten bleibt.

Bei einem anderen bekannten Reitstock (FR-A-607 977) ist keine freie vertikale Bewegbarkeit der Reitstockspitze gegeben. Die vertikale Verstellung erfolgt mittels einer Schraube. Ein Ausweichen der Reitstockspitze nach oben beim Durchbiegen des Werkstücks ist hierbei möglich.

Aufgabe der Erfindung ist es daher, einen Reitstock der eingangs genannten Gattung so auszubilden, daß auch bei vertikalen Verlagerungen der Werkstückenden eine sichere Verbindung mit der Zentrierspitze gewährleistet bleibt.

Diese Aufgabe wird erfindungsgemäß dadurch gelöst, daß das Reitstockoberteil für die nach oben freie vertikale Bewegung an vertikalen Parallelführungen geführt ist, daß das Reitstockoberteil in seiner Ausgangsstellung auf einem Widerlager ruht und daß die Pinole im Reitstockoberteil axial an einer Druckfeder abgestützt ist.

Das die Pinole mit der Zentrierspitze für das Werkstück aufweisende Reitstockoberteil erhält einen zusätzlichen Freiheitsgrad in einer vertikalen Achse. Das Reitstockoberteil kann somit die Bewegungen des Werkstückendes nach oben und/oder unten mitmachen, ohne daß die Verbindung zum Werkstück verlorengeht. Da das Reitstockoberteil in vertikaler Richtung den Bewegungen des Werkstückendes folgt, treten im Werkstück keine zusätzlichen Verformungen auf, die insbesondere bei einem Richtvorgang nachteilig wären.

In der Ausgangsstellung, d.h. vor dem Richtvorgang, ist die Lage des Reitstocks und damit die Werkstückausrichtung dadurch bestimmt, daß das Reitstockoberteil auf dem Widerlager ruht. Wenn das längliche Werkstück in einem mittleren Bereich durch den von oben wirkenden Richtstempel nach unten durchgebogen wird, werden die Werkstückenden mehr oder weniger angehoben. Dieser Bewegung der Werkstückenden folgt das jeweils zugeordnete Reitstockoberteil, indem es sich von seinem Widerlager abhebt. Die in der Pinole aufgenommene Zentrierspitze, die axial federnd angeordnet ist, bleibt dabei in Eingriff mit der zugeordneten Zentrierbohrung am Werkstückende.

Gemäß einer bevorzugten Ausführungsform der Erfindung ist vorgesehen, daß das Reitstockoberteil an vertikalen Führungssäulen des Reitstockunterteils geführt ist.

Gemäß einer weiteren Ausgestaltung des Erfindungsgedankens kann auch vorgesehen werden, daß das Reitstockoberteil durch eine Verstelleinrichtung vertikal verstellbar ist. Diese Verstelleinrichtung kann beispielsweise dazu dienen, das Gewicht des vertikal bewegbaren Reitstockoberteils auszugleichen, um die Werkstückenden von diesem Gewicht zu entlasten.

Nachfolgend wird ein Ausführungsbeispiel der Erfindung erläutert, das in der Zeichnung dargestellt ist. Es zeigt:
Fig. 1 einen Reitstock in einem senkrechten Schnitt,
Fig. 2 eine Draufsicht auf den Reitstock nach Fig. 1, wobei der Schnittverlauf der Fig. 1 durch die Linie I-I gekennzeichnet ist,
Fig. 3 einen Teilschnitt längs der Linie III-III in Fig. 2 bei ener Ausführung mit Kugelbüchsen und
Fig. 4 in stark vereinfachter Darstellungsweise eine Richtmaschine mit zwei Reitstöcken gemäß den Figuren 1 - 3.

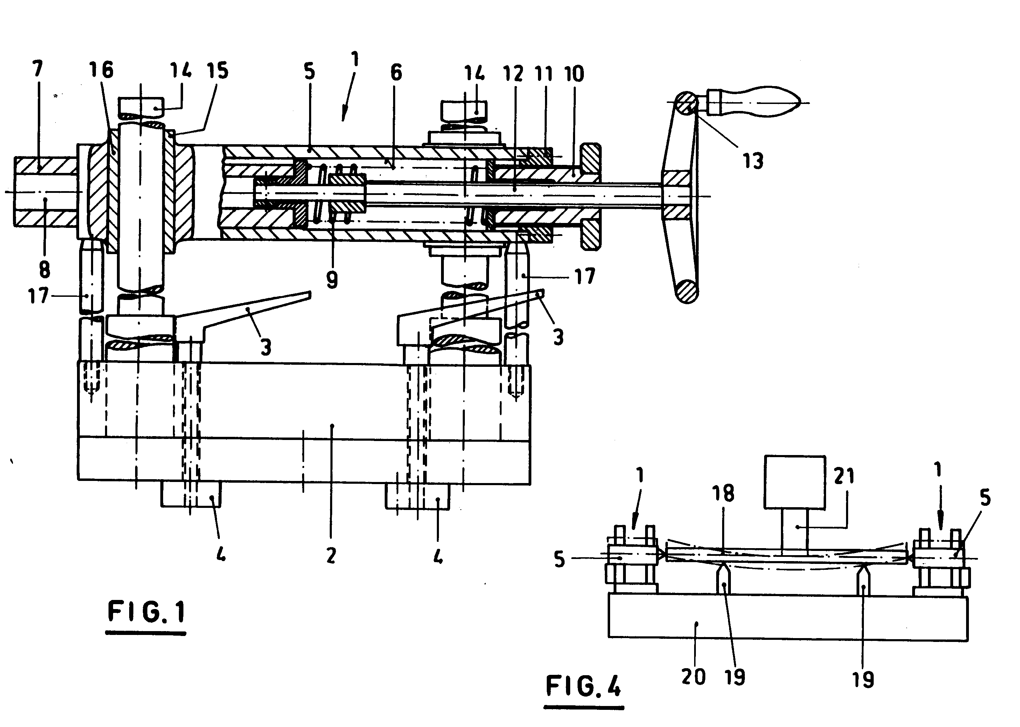

Der in den Figuren 1 bis 3 dargestellte Reitstock 1 weist ein Reitstockunterteil 2 auf, das in herkömmlicher Weise am (nicht dargestellten) Bett einer Bearbeitungsmaschine axial verstellbar angebracht werden kann. Hierzu sind am Reitstockunterteil 2 Klemmhebel 3 vorgesehen, um das Reitstockunterteil 2 mit Klemmstücken 4 am Bett der Bearbeitungsmaschine festzuklemmen. In einem Reitstockoberteil 5 ist in einer horizontalen Pinolenbohrung 6 eine Pinole 7 axial verstellbar geführt. Die Pinole 7 kann in einer kegligen Bohrung 8 eine (nicht dargestellte) Zentrierspitze aufnehmen.

Die Pinole 7 stützt sich axial über eine Druckfeder 9 an einer Gewindehülse 10 ab, die in einem am Reitstockoberteil 5 angebrachten Deckel 11 mittels Gewinde axial verstellbar ist.

Eine Gewindespindel 12 steht mit einem Innengewinde der Gewindehülse 10 in Eingriff und trägt an ihrem freien Ende ein Verstellhandrad 13. Mit ihrem anderen Ende greift die Gewindespindel 12 an der Pinole 7 an. Durch Betätigung des Handrades 13 kann die Pinole 7 gegen die Kraft der Druckfeder 9 zurückgezogen werden. Unter der Wirkung einer axialen Kraft kann die Pinole 7 gegen die Druckfeder 9 nach hinten verschoben werden.

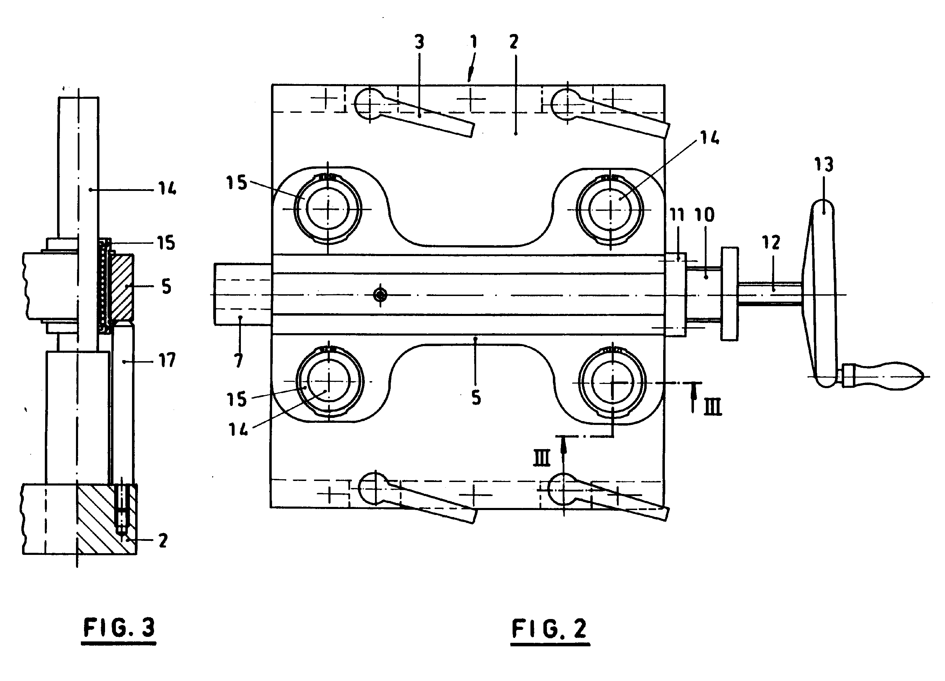

Das Reitstockunterteil 2 weist vier vertikale Führungssäulen 14 auf, auf denen jeweils eine Führungshülse 15 sitzt, beispielsweise eine Kugelbüchse (Fig. 3). Jede der Führungshülsen 15 ist in einer vertikalen Bohrung 16 des Reitstockoberteils 5 angeordnet. Die Führungssäulen 14 bilden somit eine vertikale Parallelführung für das Reitstockoberteil 5.

Vertikale Anschlagbolzen 17, die mit dem Reitstockunterteil 2 verbunden sind, bilden gemeinsam ein Widerlager für das vertikal bewegliche Reitstockoberteil 5 und bestimmen dessen Ausgangsstellung. Wenn von dem an der Pinole 7 aufgenommenen Werkstück eine nach oben gerichtete vertikale Kraft ausgeübt wird, kann das Reitstockoberteil 5 von seinem durch die Anschlagbolzen 17 gebildeten Widerlager abgehoben werden und der Werkstückbewegung nach oben folgen.

Fig. 4 zeigt den Einsatz von zwei derartigen Reitstöcken 1 bei einer Richtmaschine.

Ein längliches rotationssymmetrisches Werkstück 18, beispielsweise ein Welle oder eine Spindel, ist zwischen den beiden Reitstöcken 1 aufgenommen und stützt sich über zwei Auflager 19 am Maschinenbett 20 der Richtmaschine ab. Zwischen den beiden Auflagern 19 kann von oben ein Richtstempel 21 auf das Werkstück 18 abgesenkt werden.

Wenn sich das Werkstück 18 unter der Wirkung des Richtstempels 21 in der mit strichpunktierten Linien übertrieben angedeuteten Weise in seinem mittleren Bereich durchbiegt, heben sich die beiden Werkstückenden an. Die Reitstockoberteile 5 der beiden Reitstöcke 1 folgen dieser Vertikalbewegung nach oben, so daß das Werkstück 18 ohne Zwang die für den Richtvorgang erforderliche Verformung ausführen kann.

## Patentansprüche

1. Reitstock zur Aufnahme von Werkstücken auf Bearbeitungsmaschinen, insbesondere Richtmaschinen, mit einer in einem Reitstockoberteil (5) gelagerten Pinole (7) und einem Reitstockunterteil (2), wobei das Reitstockoberteil (5) gegenüber dem Reitstockunterteil (2) nach oben frei vertikal beweglich ist, dadurch gekennzeichnet, daß das Reitstockoberteil (5) für die nach oben freie vertikale Bewegung an vertikalen Parallelführungen (14) geführt ist, daß das Reitstockoberteil (5) in seiner Ausgangsstellung auf einem Widerlager (17) ruht und daß die Pinole (7) im Reitstockoberteil (5) axial an einer Druckfeder (9) abgestützt ist.

2. Reitstock nach Anspruch 1, dadurch gekennzeichnet, daß die vertikalen Parallelführungen für das Reitstockoberteil (5) vertikale Führungssäulen (14) des Reitstockunterteils sind.

3. Reitstock nach Anspruch 1 oder 2, dadurch gekennzeichnet, daß das Reitstockoberteil (5) durch eine Verstelleinrichtung vertikal verstellbar ist.

## Claims

1. Tailstock for holding workpieces on processing machines, especially straightening machines, having a barrel (7) supported in an upper section (5) of the tailstock and a lower section (2) of the tailstock, the upper section (5) of the tailstock being freely movable vertically upwards in relation to the lower section (2) of the tailstock, characterised in that the upper section (5) of the tailstock is guided on vertical parallel guides (14) for the free movement vertically upwards, that the upper section (5) of the tailstock in its initial position rests on an abutment (17) and that the barrel (7) in the upper section (5) of the tailstock is supported axially against a pressure spring (9).

2. Tailstock according to Claim 1, characterised in that the vertical parallel guides for the upper section (5) of the tailstock are vertical guide supports (14) of the lower section of the tailstock.

3. Tailstock according to Claim 1 or 2, characterised in that the upper section (5) of the tailstock is vertically adjustable by an adjustment mechanism.

## Revendications

1. Contre-poupée pour recevoir des pièces à usiner sur des machines de traitement, en particulier des machines à dresser, comportant une douille (7) montée dans une partie supérieure (5) de la contre-poupée et une partie inférieure (2) de la contre-poupée, la partie supérieure (5) de la contre-poupée pouvant se déplacer librement vers le haut verticalement vis-à-vis de la partie inférieure (2) de la contre-poupée, caractérisée en ce que la partie supérieure (5) de la contre-poupée est guidée dans son déplacement vertical libre vers le haut sur des glissières parallèles verticales (14), la partie supérieure (5) de la contre-poupée repose dans sa position de départ sur une butée (17) et la douille (7) de la partie supérieure (5) de la contre-poupée est pressée axialement sur un ressort de compression (9).

2. Contre-poupée selon la revendication 1, caractérisée en ce que les glissières parallèles verticales destinées à la partie supérieure (5) de la contre-poupée sont des colonnes de guidage verticales (14) de la partie inférieure de la contre-poupée.

3. Contre-poupée selon la revendication 1 ou 2, caractérisée en ce que la partie supérieure (5) de la contre-poupée est réglable verticalement par un dispositif de réglage.
